Europäisches Patentamt

European Patent Office

Office européen des brevets

(19)

(11) Numéro de publication : **0 340 158 B1**

(12) **FASCICULE DE BREVET EUROPEEN**

(45) Date de publication du fascicule du brevet :
29.01.92 Bulletin 92/05

(51) Int. Cl.⁵ : **B23B 13/02**

(21) Numéro de dépôt : **89810204.1**

(22) Date de dépôt : **15.03.89**

(54) **Tour automatique destiné à usiner de la matière en torche.**

(30) Priorité : **15.04.88 CH 1401/88**

(43) Date de publication de la demande :
**02.11.89 Bulletin 89/44**

(45) Mention de la délivrance du brevet :
**29.01.92 Bulletin 92/05**

(84) Etats contractants désignés :
**CH DE ES FR GB IT LI**

(56) Documents cités :
**DE-C- 862 702
DE-C- 903 396
DE-C- 906 037**

(73) Titulaire : **Habegger, Harold
Sous Graitery 10
CH-2738 Court (CH)**

(72) Inventeur : **Habegger, Harold
Sous Graitery 10
CH-2738 Court (CH)**

(74) Mandataire : **Caron, Gérard
ICB Ingénieurs Conseils en Brevets SA
Passage Max. Meuron 6
CH-2001 Neuchâtel (CH)**

EP 0 340 158 B1

## Description

L'objet de la présente invention est un tour automatique destiné à usiner de la matière en torche, c'est-à-dire une matière filiforme enroulée en forme de bobine.

On connaît d'après le brevet DE-C-903396 un tour dans lequel la matière, qu'on fait passer éventuellement après la sortie de la torche entre une suite de rouleaux disposés en quinconce pour la rendre rectiligne, est saisie par une pince d'avance qui, au début de chaque cycle d'usinage, la pousse d'une longueur suffisant à la production d'une pièce à travers la pince de serrage, alors ouverte, d'une poupée. Au terme de l'alimentation par la pince d'avance, la pince de serrage de la poupée est refermée et l'usinage d'une pièce peut commencer. A cet effet, ces tours notoirement connus comprennent un plateau rotatif devant la poupée. Des burins, mobiles radialement, sont montés sur la face de ce plateau tournée vers la poupée.

Si les pièces à usiner ont des portées d'un diamètre de l'ordre du millimètre ou moins, il n'est plus possible de faire travailler les burins de ces tours connus à leurs vitesses de coupe. Pour cela, le plateau portant les outils devrait tourner à des vitesses incompatibles avec son inertie et les balourds produits par les déplacements des outils. Aux vitesses de rotation admissibles du plateau, c'est la production qui en pâtit, bien que la matière en torche dispense du ravitaillement conventionnel des barres de matière.

L'invention vise à remédier aux défauts des tours connus en réduisant notablement les vitesses de rotation des organes du tour, tout en en augmentant considérablement la production.

Pour y parvenir, le tour selon l'invention est du type destiné à usiner de la matière en torche, dans lequel, ladite matière est amenée à une broche à partir d'une torche, éventuellement après avoir passé à travers un redresseur, ledit tour étant caractérisé en ce qu'il comprend une broche agencée de façon à pouvoir tourner autour de son axe d'un angle un peu supérieur à 360°, entre deux limites fixes, en ce que ses outils destinés à usiner la face latérale des pièces et à les tronçonner sont constitués par des fraises ou des meules de forme, et en ce que ladite broche est éloignée suffisamment de ladite torche pour que la matière serrée dans la broche puisse subir sans dommage les déformations qui résultent des rotations de ladite broche.

Les rotations de la broche du tour exercent, bien sûr, des torsions de la matière. Au niveau de la pince de serrage de cette broche, les rotations de cette dernière ne tordent la matière au maximum que d'un peu plus de 360° et dans certains cas que de 180°, alternativement dans l'un et l'autre sens, à partir d'une position située à équidistance des positions limites.

On remarquera que si la broche passe de l'une de ses limites angulaires à l'autre en une seconde, ce qui peut correspondre à la production d'une pièce, elle effectue à peine un peu plus de 60 tours par minute. Or, dans les tours automatiques, une telle vitesse de rotation est très lente, ce qui élimine les problèmes d'échauffement et de dilatation.

D'autre part, une fraise de 50 millimètres de diamètre, par exemple, a une circonférence un peu supérieure à 150 millimètres. Si on fait tourner cette fraise à mille tours par minute, ce qui est encore une vitesse lente, la vitesse linéaire des arêtes de coupe de ses dents périphériques est de 150 mètres par minute, ce qui constitue une vitesse de coupe élevée sur une pièce pratiquement immobile. A titre de comparaison, pour que l'arête de coupe d'un burin atteigne la même vitesse de coupe sur une matière de 1 millimètre, ce burin devrait tourner à 45'000 tours par minute autour de la matière.

Pour usiner les faces latérales d'une série de pièces, il est indiqué d'utiliser des fraises ou meules en forme de disques circulaires dont la tranche a, en section dans un plan radial par leur axe, la forme à donner aux dites pièces et de faire tourner ces fraises ou meules autour d'axes parallèles à celui de la broche du tour. De préférence, on disposera deux arbres portant des fraises ou des meules de part et d'autre de la broche. Selon la forme de la face latérale des pièces à produire, il peut être avantageux de monter deux ou plus de fraises ou de meules coaxialement sur le même arbre, chacune d'elles usinant simultanément une portion de la face latérale des pièces, le long de celles-ci. On utilisera de préférence des fraises ou meules dont le diamètre est relativement grand par rapport à celui de la matière à usiner, en particulier si ce diamètre est petit, car plus le diamètre des fraises ou meules est grand, moins il faut les faire tourner vite pour atteindre les vitesses de coupe optimales.

Dans des formes spéciales d'exécution destinées spécialement à fileter, en particulier, des pas de vis par fraisage, la broche est montée de façon qu'elle puisse effectuer un déplacement axial au moins égal au pas du filet à fraiser et des moyens de commande sont associés à cette broche pour la déplacer axialement.

Dans ce cas, la fraise a une épaisseur qui correspond à la longueur du filetage à usiner et elle présente des rangées de dents circulaires dont le profil correspond à celui des filets du pas de vis. Au fur et à mesure que la broche effectue un tour sur elle-même, son dispositif de commande la déplace axialement d'une distance égale au pas du filetage à usiner. Quand la broche a fait un peu plus d'un tour, par exemple de l'une de ses limites angulaires jusqu'à l'autre, le filetage est terminé.

Une forme d'exécution du tour selon l'invention, destiné à produire des vis à pivot est représentée schématiquement et à simple titre d'exemple au dessin annexé, dans lequel :

la Fig. 1 est une vue en élévation d'une partie de cette forme d'exécution ;

la Fig. 2 est une vue de face à plus grande échelle d'une partie de la Fig. 1, depuis la gauche de cette figure ;

la Fig. 3 est une vue en perspective explosée de certaines parties du tour, et

la Fig. 4 est une vue en plan de certaines parties du tour, en cours d'usinage de vis à pivot.

Le tour représenté est destiné à usiner de la matière en torche, c'est-à-dire une matière filiforme 1, qui est enroulée en forme de bobine 2 et disposée sur un dévidoir 3. Ce dernier est placé derrière le tour 4, à une hauteur convenable pour débiter la matière 1 dans une broche 5 du tour.

La broche 5 est agencée de façon à pouvoir effectuer des mouvements de rotation dans un sens et dans l'autre d'un angle légèrement supérieur à 360°, entre deux limites fixes. Cela signifie que la broche 5 peut aussi tourner d'un peu plus de 180° dans l'un et l'autre sens, à partir d'une position angulaire dite neutre, située à équidistance de ses positions limites. A cet effet, la broche 5 est montée dans une poupée fixe 6. Alternativement, elle pourrait aussi être pivotée dans deux montants fixes du bâti du tour, l'un, situé vers l'avant de la broche 5, et l'autre, vers l'arrière de cette broche. La broche 5 contient une pince de serrage 7 conventionnelle, qui est commandée par des moyens (non représentés) également conventionnels.

La matière 1 peut être introduite dans la pince 7, alors ouverte, de la broche 5, lorsque celle-ci est à équidistance de ses positions limites. Avant d'arriver dans la pince 7, la matière 1 passe à travers une pince d'avance (non représentée) conventionnelle, qui est commandée par des moyens (non représentés) également conventionnels. Cette pince d'avance est mobile axialement entre deux butées, séparées par une distance ajustée en fonction de la longueur des pièces à usiner. Pendant l'usinage d'une pièce, la pince d'avance est dans sa position postérieure. A la fin de l'usinage d'une pièce, la pince de serrage 7 s'ouvre et la pince d'avance est déplacée jusque dans sa position antérieure. Elle enserre la matière 1 assez fortement pour l'entraîner avec elle au cours de ce mouvement. Lorsqu'elle est parvenue à fin de course, la pince de serrage 7 se referme et la pince d'avance retourne dans sa position postérieure, en glissant le long de la matière 1.

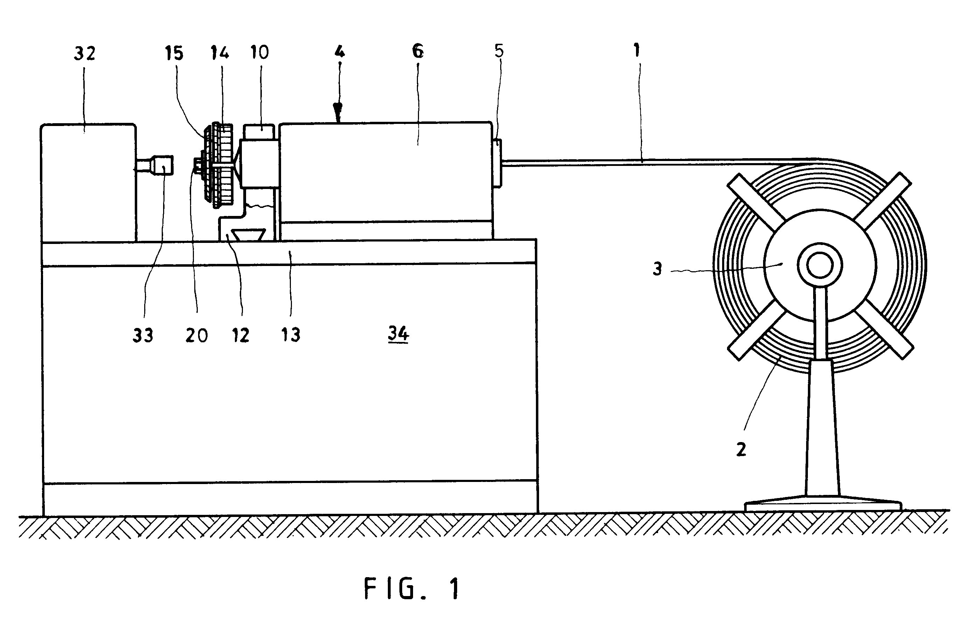

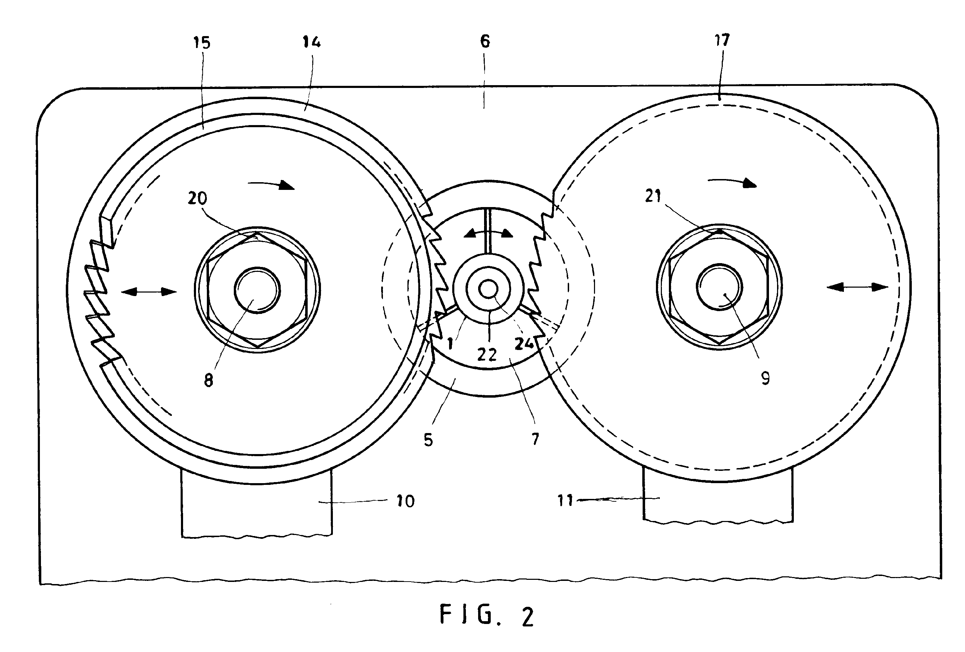

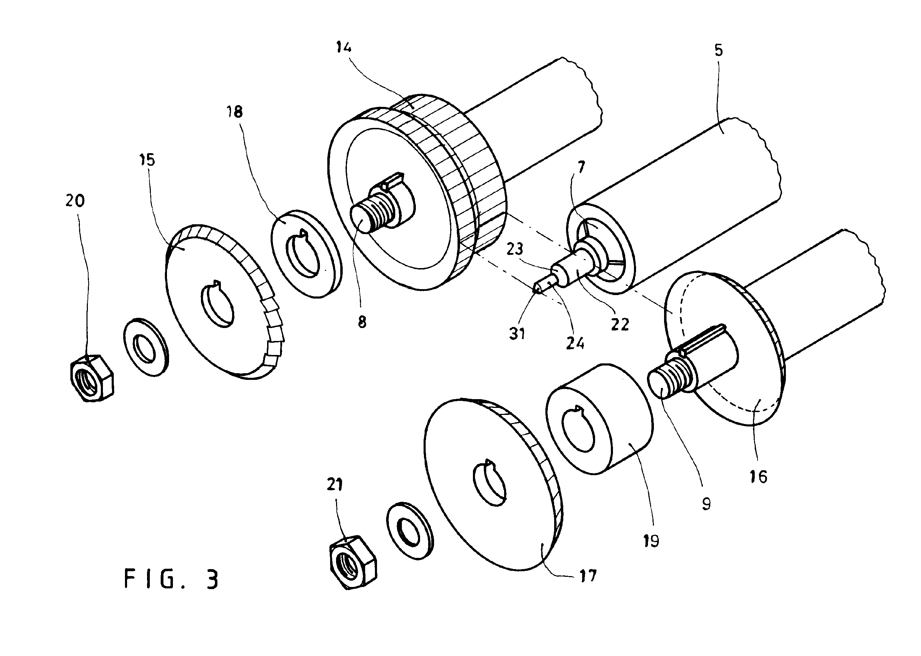

Pour usiner une vis sur le bout de matière ainsi avancé au-delà de la pince de serrage 7, le tour comprend deux arbres 8, 9 (Fig. 2 et 3), parallèles à l'axe de la broche 5 et disposés de part et d'autre de celle-ci. Ces arbres sont montés rotativement dans des montants 10, 11 d'un chariot 12 (Fig. 1), qui peut coulisser perpendiculairement à l'axe de la broche 5 sur un banc 13 du tour 4. D'autres montages de ces arbres sont possibles. Ils pourraient, par exemple, être montés sur des bras basculant sur le bâti du tour. Les arbres 8, 9 sont entraînés en rotation de façon conventionnelle par des moteurs (non représentés). Deux fraises 14, 15 sont calées sur l'arbre 8 et deux autres fraises 16, 17, sont calées sur l'arbre 9 (Fig. 3). Les fraises calées sur un même arbre sont séparées l'une de l'autre par une entretoise 18, 19. Les fraises 14-17 sont retenues axialement en place sur les arbres respectifs par des écrous 20, 21.

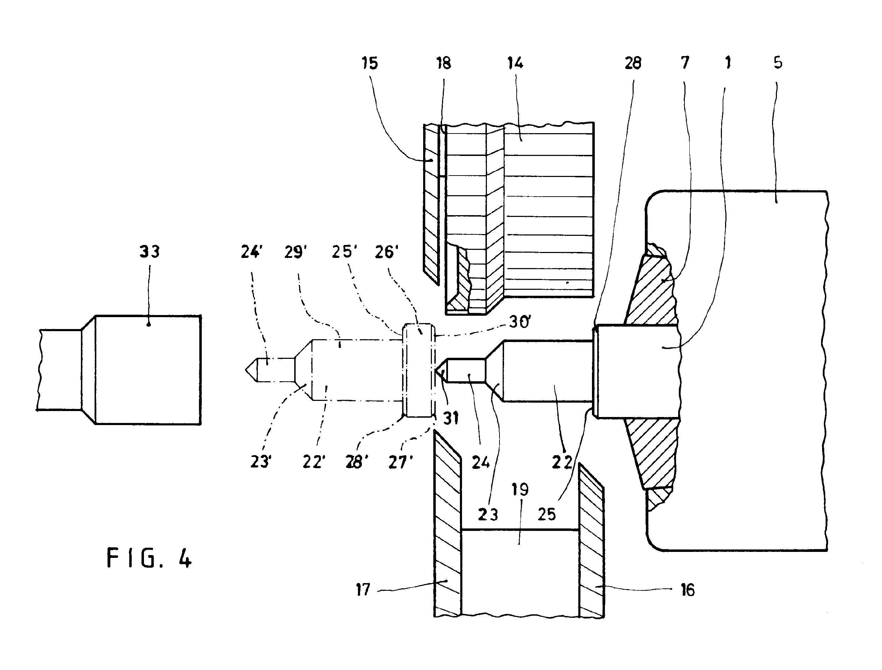

Comme le montre la Fig. 4, la fraise 14 a un profil de forme. Elle forme la portée 22, 22′ des vis, qui est destinée à être filetée, ainsi que la partie tronconique 23, 23′ et le pivot 24, 24′ de ces vis, tout en formant la face antérieure 25, 25′ de la tête 26′. De son côté, la fraise 15 sert à casser l'arête postérieure 27′ des têtes 26′ des vis. De même, la fraise 16 casse l'arête antérieure 28, 28′ des têtes 26′ des vis et la fraise 17 tronçonne la vis 29′ terminée, en formant la face postérieure 30′ de la tête de cette vis 29′ et la pointe 31 de la vis suivante.

Le tour comprend encore un appareil en bout 32 (Fig. 1), qui est muni d'une filière 33 pour former les pas de vis. L'ensemble des organes du tour est monté sur un socle 34.

Comme indiqué ci-dessus, la pince de serrage 7 se ferme, lorsque la broche 5 se trouve a équidistance de ses positions limites, en position neutre. Après cette fermeture, la broche 5 tourne d'un peu plus de 180° dans le sens horaire (Fig. 2), jusque dans l'une de ses positions angulaires limites. Cette rotation produit une torsion de la matière 1. Cette dernière est, toutefois, en mesure de supporter cette contrainte sans dommage. Il suffit, en effet, que le dévidoir 3 soit assez éloigné du tour 4.

Lorsque la broche 5 est ainsi arrivée à bout de course, le chariot 12 déplace l'arbre 8 vers la droite (Fig. 2) de manière à faire entrer la fraise 14 en action. Lorsque cette fraise est pleinement engagée dans la matière, la broche 5 commence à tourner dans le sens antihoraire (Fig. 2), jusque dans son autre position limite. Elle tourne ainsi d'un peu plus de 360°, de sorte que la fraise 14 taille la portée 22, la partie 23 et le pivot 24 tout autour de la partie de matière sortant de la pince 7. Si la matière risque de plier sous l'action de la fraise 14, elle sera soutenue par des moyens bien connus des hommes du métier.

On remarquera que la vis 29′, représentée en traits mixtes dans la Fig. 4, tient encore à la matière 1 par le pivot 24. En même temps que la fraise 14 effectue l'opération décrite, la fraise 15 casse donc l'arête 27′ de la vis 29′.

La fraise 14 peut effectuer son travail en une seule passe. Il peut cependant être indiqué de ne pas faire foncer cette fraise jusqu'à la cote voulue, afin de prendre une première passe d'ébauche en un premier temps, puis de prendre ensuite une petite passe de terminaison en faisant alors tourner la broche 5 dans le sens horaire jusqu'à la limite correspondante.

Lorsque les fraises 14 et 15 ont terminé leur travail, le chariot 12 les dégage en se déplaçant vers la gauche jusque dans la position des fraises représentée à la Fig. 2. La filière 33 est alors actionnée de façon à tailler un pas de vis sur la portée 22'. Après ce taillage, le chariot 12 se déplace à nouveau vers la gauche (Fig. 2) de façon à faire entrer les fraises 16, 17 en action. Ces dernières travaillent pendant que la broche 5 passe de la position limite, qu'elle avait atteinte, dans l'autre position limite.

Tandis que la fraise 17 forme la face postérieure 30' de la tête 26' de la vis 29' représentée en traits mixtes à la Fig. 4 et tronçonne cette vis, la fraise 16 casse l'arête antérieure 28 de la tête de la vis suivante. Quand les fraises 16, 17 ont terminé leur travail, elles sont ramenées dans la position de la Fig. 2 et la broche 5 retourne en position neutre. Le cycle d'opérations est terminé. La pince de serrage 7 s'ouvre pour permettre l'avance d'une nouvelle longueur de matière 1.

Il est clair que les vis décrites pourraient tout aussi bien être usinées à l'aide de meules de forme, à la place des fraises 14 à 17. Le choix entre meules et fraises se fera principalement en fonction de la composition de la matière 1 et aussi, bien sûr, du coût et de la durée de vie de ces outils.

Il serait naturellement possible d'éviter les déplacements à vide du tour décrit, qui amènent la broche 5 de sa position neutre, jusque dans l'une de ses positions limites, avant que ne commencent les opérations d'usinage, puis qui ramènent cette broche 5 de la position limite jusqu'en position neutre, après les opérations d'usinage. Il suffirait, à cet effet, d'introduire la matière 1 dans la broche 5 et de l'y faire avancer lorsque cette broche occupe l'une de ses positions limites. Dans ce cas, la broche 5 tordrait, bien sûr, la matière 1 d'un tour complet, au niveau de sa pince de serrage 7, pour assurer l'usinage en question. Dans ces conditions, cet usinage serait entièrement effectué, simplement en faisant passer la broche 5 de l'une de ses positions limites à l'autre, puis en la ramenant dans la première position limite. La torsion de la matière 1 d'un tour complet n'entraîne pas de déformation permanente de celle-ci, pourvu que la torche 2, 3 et éventuellement le redresseur soient assez éloignés du tour.

A l'issue des opérations décrites, les vis ne sont pas complètement terminées. Il faut les reprendre pour en fendre la tête.

Certaines qualités de vis exigent un filet fraisé. Le tour décrit permet de les usiner. A cet effet, une fraise, dont l'épaisseur correspond à la longueur du filetage à former est substituée à la fraise 14. Cette fraise présente des couronnes circulaires de dents ayant le profil des filets à former. La broche 5 doit alors être montée de façon à pouvoir se déplacer axialement sur une longueur au moins égale au pas du filetage. Ce dernier sera formé en un tour de la broche 5, à condition, bien sûr, de faire avancer cette dernière axialement au fur et à mesure qu'elle tourne.

Dans ce cas, la tête des vis peut être formée à l'avant du filetage au lieu d'être formée à l'arrière de celui-ci, comme dans l'exemple représenté au dessin. Cela a l'avantage de pouvoir fendre cette tête avant le tronçonnement. Pour cela, cette tête sera avantageusement engagée dans une lunette fixe présentant une rainure diamétrale dans sa face antérieure. En faisant ensuite tourner la tête fendue de la vis dans cette lunette, on enlèvera la bavure résultant du fendage. Avant de procéder au tronçonnage, il faudra naturellement faire reculer axialement la broche 5 pour dégager la tête de la vis de la lunette.

Le tour décrit n'est pas uniquement avantageux pour produire des vis ; il peut servir à l'usinage d'autres pièces, par exemple des fiches d'éléments électroniques à planter dans des douilles de circuits imprimés. Il peut évidemment aussi être utilisé pour usiner des pièces relativement longues par rapport à leur diamètre. Il suffit alors de les soutenir de manière bien connue des hommes du métier.

Comme la broche du tour décrit tourne à une vitesse, qui est très lente dans les tours automatiques, lorsqu'elle fait un tour par seconde, cette vitesse peut être augmentée et avec elle la production du tour, sans pour autant avoir à faire face à des problèmes d'échauffement et de dilatation.

Les opérations du tour selon l'invention peuvent naturellement être commandées par cames ou numériquement de façons conventionnelles.

**Revendications**

1. Tour automatique destiné à usiner de la matière en torche, dans lequel, ladite matière est amenée à une broche à partir d'une torche (2, 3), éventuellement après avoir passé à travers un redresseur, ledit tour étant caractérisé en ce qu'il comprend une broche (5) agencée de façon à pouvoir tourner autour de son axe d'un angle un peu supérieur à 360°, entre deux limites fixes, en ce que ses outils destinés à usiner la face latérale des pièces et à les tronçonner sont constitués par des fraises (14-17) ou des meules de forme, et en ce que ladite broche (5) est éloignée suffisamment de ladite torche (2, 3) pour que la matière serrée dans la broche (5) puisse subir sans dommage les déformations qui résultent des rotations de ladite broche (5).

2. Tour automatique selon la revendication 1, caractérisé en ce que la dite broche (5) est montée de façon à pouvoir effectuer un déplacement axial et en ce que des moyens de commande sont associés à cette broche (5) pour la déplacer axialement.

## Claims

1. Automatic lathe for machining coiled stock, wherein said stock is conducted towards a spindle from a spool (2, 3), on occasion after having passed through a straightener, said mill being characterized in that it comprises a spindle (5) so arranged as to be able to turn about its axis through an angle slightly in excess of 360°, between two fixed limits, in that its tools for machining the lateral face of the workpieces and for severing these workpieces, comprise milling cutters (14-17) or shaped grinding wheels, and in that said spindle (5) is remote from said spool (2, 3) in such an extent that the stock clamped in said spindle (5) can undergo, without any detrimental effect, the deformations resulting from the revolutions of said spindle (5).

2. Automatic mill according to claim 1, characterized in that said spindle (5) is adapted to move along its axis and in that control means are associated to said spindle (5) to move said spindle in axial direction.

## Patentansprüche

1. Automatische Drehmaschine zum Bearbeiten von aufgehaspeltem Material, bei der das Material einer Spindel von einer Haspel (2, 3) einer Spindel, gegebenenfalls nach Durchlauf einer Richtvorrichtung, zugeführt wird, welche Drehmaschine dadurch gekennzeichnet ist, daß sie eine Spindel (5) umfaßt, die um ihre Achse um einen wenig über 360° liegenden Winkel zwischen zwei festen Begrenzungen drehbar ist, daß ihre Werkzeuge zum Bearbeiten der Seitenflächen von Werkstücken und deren Ablängen von Fräsern (14-17) oder Formschleifkörpern gebildet sind, und daß die Spindel (5) von der Haspel (2, 3) hinreichend weit entfernt ist, daß das in der Spindel (5) eingespannte Material ohne Beschädigung den durch die Drehungen der Spindel (5) hervorgerufenen Deformationen standhalten kann.

2. Automatische Drehmaschine nach Anspruch 1, dadurch gekennzeichnet, daß die Spindel (5) axialverlagerbar ist und daß der Spindel (5) Steuermittel für ihre axiale Verlagerung zugeordnet sind.

FIG. 1

EP 0 340 158 B1

FIG. 2

FIG. 3

FIG. 4